Europäisches Patentamt

European Patent Office

Office européen des brevets

(11) Publication number: **0 688 843 A1**

# EUROPEAN PATENT APPLICATION

(21) Application number: **95108577.8**

(22) Date of filing: **03.06.95**

(51) Int. Cl.⁶: **C09J 7/02**, C09J 121/02

(30) Priority: **24.06.94 US 265083**

(43) Date of publication of application:
**27.12.95 Bulletin 95/52**

(84) Designated Contracting States:
**DE FR GB IT**

(71) Applicant: **Beiersdorf Aktiengesellschaft
Unnastrasse 48
D-20245 Hamburg (DE)**

(72) Inventor: **Yunzhen Shen, Helen
7225 Broadford Court
Charlotte, NC 28277 (US)**
Inventor: **Goozner, Robert
4810 Westridge Drive
Charlotte, NC 28210 (US)**
Inventor: **Ozari, Yehuda
5625 Camelot Drive
Charlotte, NC 28270 (US)**

(54) **Aqueous pressure sensitive adhesives**

(57) An aqueous emulsion which, upon application to a substrate and drying, forms a pressure sensitive adhesive which can be adhered to and removed from a surface, which comprises water and
  a) about 15 to 50% by weight of solids, about 40 to 80% by weight of such solids comprising rubber,
  b) about 50 to 120% by weight of the rubber of a resin tackifier,
  c) 0 to about 10% by weight of the rubber of a curing agent, and
  d) 0 to about 10% by weight of the rubber of a filler.

EP 0 688 843 A1

The present invention relates to novel aqueous emulsions which, upon application to a substrate and drying, form pressure sensitive adhesives which can be adhered to and removed from surfaces, e.g. form masking tapes.

Removable tapes have been used in painting for masking off areas which are not to be painted and hence are referred to as masking tapes. If they adhere too lightly they might not function properly. If they adhere too strongly they may leave residues when eventually removed.

The adhesives of such tapes generally comprise natural or synthetic rubbers. They can be provided on such tapes in the form of solutions in volatile organic solvents which are thereafter evaporated to leave the adhesive.

While such tapes perform satisfactorily in many uses, their preparation presents some environmental problems, viz. the use and disposal of volatile organic solvents.

It is accordingly an object of the present invention to provide an adhesive formulation which can be applied to masking tape backings to provide satisfactorily performing adhesives without the use of organic solvents.

It is another object of the invention to provide such formulations which will still permit clean removal of the tape even after a painted article is subjected to relatively high baking temperatures.

These and other objects and advantages are realized in accordance with the present invention pursuant to which there is provided an aqueous emulsion which upon application to a substrate and drying, forms a pressure sensitive adhesive which can be adhered to and removed from a surface. The emulsion comprises water and

a) about 15 to 50% by weight of solids, about 40 to 80% by weight of such solids comprising rubber,

b) about 50 to 120% by weight of the rubber of a resin tackifier,

c) 0 to about 10% by weight of the rubber of a curing agent, and

d) 0 to about 10% by weight of the rubber of a filler.

Advantageously about 50% by weight comprises solids, at least about 30% by weight of the rubber comprising at least one of natural rubber and SBR (styrene-butadiene rubber). About 30 to 100%, preferably about 40 to 80% and more preferably up to about 50%, by weight of the rubber comprises natural rubber.

The balance of the solids of (a), beyond rubber, may be any solids normally contained in rubber latices, such as resins, curing agents, antioxidants and fillers, e.g. zinc oxide, butyl zimate, (zinc di-n-butyldithiocarbamate), clay, etc.

Desirably, the resin tackifier comprises at least one of a rosin ester and a resin of a hydrocarbon containing at least 5 carbon atoms, the tackifier having a glass transition temperature of about -S to 55°C, preferably about 25 to 45°C. Advantageously, it may have a molecular weight of about 400 to 800, preferably about 600.

Advantageously, the curing agent comprises at least one of butyl zimate and a metal oxide and is present in about 1 to 2%, and the filler comprises at least one of clay, silica and titanium dioxide, present in about 2 to 10% by weight of the rubber.

The novel emulsions are applied to backings such as plastic or preferably paper in amounts corresponding to about 33 to 60, and preferably about 37 to 48, and, more preferably, about 41 to 44 grams of rubber per square meter of backing. Thereafter the coated backings are dried at moderate temperature, e.g. below about 210°C and preferably about 140 to 170°C, to remove the water therefrom. The dried supported tapes are then rolled up in conventional manner and the rolls cut to predetermined widths such as about 0.5 to 2 inches, or the tapes are cut longitudinally into such predetermined widths and then rolled up.

The invention will be further described in the following examples wherein all parts are by weight unless otherwise expressed.

Example 1

|  | Dry Parts by Weight |
|---|---|
| **UNITEX Natural Rubber Latex** | 80 |
| **UNOCAL R9413 SBR Latex** | 20 |
| **HERCULES PENTALYN H Resin** | 50 |
| **HERCULES PICCOPALE 85 Resin** | 50 |
| **Titanium Oxide** | 3.0 |
| **Zinc Oxide** | 2 |
| **Butyl Zimate** | 1 |
| **AGERITE SUPERLITE** | 0.5 |

Each of the first four ingredients constituted an emulsion containing about 55% solids. The dry parts by weight is based on the rubber or resin content of such ingredients. All the components were mixed with stirring at room temperature. The mixture was spread on a saturated and backsized paper tape back using a Meyer rod. The solvent (water) was evaporated in an oven at 250°F for 2 1/2 minutes. The tape had an adhesion to steel (PSTC Method #1) of 35 oz./in. and a Douglas Tack of 30. The shear of the tape was 30+ hours. The cape had a clean removal from a painted panel after 45 minutes exposure at 180°F.

Table 1 sets forth the formulations of Example 1 and of other compositions similarly prepared and Table 2 sets forth the performance data for such formulations.

**TABLE 1**
**PARTS BY WEIGHT, DRY**

| Example Formula No. | NR | SBR-9413 | Pentalyn H | Piccopale | TiO$_2$ | ZnO | Butyl Z | Agerite Superlite | ECR-108E | Tacolyn 285 |
|---|---|---|---|---|---|---|---|---|---|---|
| 1 | 80 | 20 | 50 | 50 | 3 | 2 | 1 | | | |
| 2 | 80 | 20 | 60 | 20 | 3 | 4 | 1.5 | | | |
| 3 | 80 | 20 | 10 | 40 | 3 | 0 | 0 | | | |
| 4 | 80 | 20 | 35 | 40 | 3 | 10 | 4 | | | |
| 5 | 72 | 28 | 60 | 65 | 3 | 5 | 2 | | | |
| 6 | 50 | 50 | | | 3 | | | 0.5 | 50 | |
| 7 | 45 | 55 | | | 3 | | | | 100 | |
| 8 | 30 | 70 | | | | | | | 80 | |
| 9 | | | | | | | | | 56 | 50 |

**TABLE 2 - PHYSICAL PROPERTIES**

| Formula No. | Adhesion/Steel, oz./in. | Tack, in. | Shear/Steel, hours |
|---|---|---|---|
| 1 | 35 | 4/8 | 30 |
| 2 | 22 | 3/8 | 2.7 |
| 3 | 20 | 6/8 | 0.5 |
| 4 | 32 | 4/8 | 0.1 |
| 5 | 43 | 6/8 | 0.3 |
| 6 | 24 | 2/8 | 0.5 |
| 7 | 68 | 5/8 | 0.3 |
| 8 | 46 | 2/8 | 1.4 |
| 9 | 10 | 12/8 | 0.1 |

In the foregoing examples, Agerite Superlite (Vanderbilt) is a mixture of polybutylated bisphenol A (CAS 78684-69-0). It functions as an antioxidant.

Resin emulsions included:

Pentalyn H (Hercules), a hydrogenated ester of rosin;

Piccopale (Hercules), an aliphatic resin manufactured from mixed monomers of petroleum origin;

ECR 108E (Exxon), an aliphatic resin of petroleum origin;
Tacolyn 1085 (Hercules), a proprietary resin dispersion.

In Example 1 the Unocal (Rohm & Haas) 9413 can be replaced by 9423, or an SBR emulsion having a core-shell configuration.

It will be appreciated that the instant specification and the claims are set forth by way of illustration and not limitation, and that various modifications and changes may be made without departing from the spirit and scope of the present invention.

**Claims**

1. An aqueous emulsion which, upon application to a substrate and drying, forms a pressure sensitive adhesive which can be adhered to and removed from a surface, which comprises water and
    a) about 15 to 50% by weight of solids, about 40 to 80% by weight of such solids comprising rubber,
    b) about 50 to 120% by weight of the rubber of a resin tackifier,
    c) 0 to about 10% by weight of the rubber of a curing agent, and
    d) 0 to about 10% by weight of the rubber of a filler.

2. An emulsion according to claim 1, wherein about 50% by weight comprises solids, at least about 30% by weight of the rubber comprising at least one of natural rubber and SBR.

3. An emulsion according to claim 2, wherein at least about 30 to 100% by weight of the rubber comprises natural rubber.

4. An emulsion according to claim 2, wherein about 40 to 80% by weight of the rubber comprises natural rubber.

5. An emulsion according to claim 1, wherein the resin tackifier comprises at least one of a rosin ester and a resin of a hydrocarbon containing at least 5 carbon atoms, the tackifier having a glass transition temperature of about -5 to 55°C.

6. An emulsion according to claim 1, wherein the tackifier has a glass transition temperature of about 20 to 45°C.

7. An emulsion according to claim 1, wherein the curing agent is present in about 1 to 2% by weight of the rubber.

8. An emulsion according to claim 1, wherein the curing agent comprises at least one of butyl zimate and a metal oxide.

9. An emulsion according to claim 1, wherein the filler comprises at least one clay, silica and titanium oxide.

10. An emulsion according to claim 4, wherein the resin tackifier comprises at least one of a rosin ester and a resin of a hydrocarbon containing at least 5 carbon atoms, the tackifier having a glass transition temperature of about 25 to 45°C, the curing agent comprises at least one of butyl zimate and a metal oxide and the filler comprises at least one of clay, silica and titanium oxide.

11. A pressure sensitive tape removable from a surface to which it may be applied comprising the produce of applying to a substrate an emulsion according to claim 1 and drying to remove the water.

12. A pressure sensitive tape removable from a surface to which it may be applied comprising the product of applying to a substrate an emulsion according to claim 4 and drying to remove the water.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | FR-A-1 313 810 (ADHESIVE TAPES LIMITED) <br> * the whole document * | 1-3 | C09J7/02 <br> C09J121/02 |
| X | US-A-4 767 813 (W.T.EVITT) <br> * claims 1,3 * | 1,2,5,6 | |
| X | EP-A-0 159 821 (EXXON RESEARCH AND ENGINEERING COMPANY) <br> * page 9, line 22-29; claim 1 * | 1,5,11, 12 | |
| | | | TECHNICAL FIELDS SEARCHED (Int.Cl.6) |
| | | | C09J |

The present search report has been drawn up for all claims

| Place of search | Date of completion of the search | Examiner |
|---|---|---|
| THE HAGUE | 26 September 1995 | Van Humbeeck, F |

EPO FORM 1503 03.82 (P04C01)